# EUROPEAN PATENT APPLICATION

(11) **EP 4 450 307 A1**
(43) Date of publication of application: **23.10.2024**
(21) Application number: 23315090.3
(22) Date of filing: 21.04.2023
(51) Int. Cl.: B60K 1/00, B60K 11/04, B60K 11/08, B60W 50/04

(54) **SYSTEM AND METHOD OF CLEANING ENVIRONMENTAL AIR, AND VEHICLE COMPRISING THE SYSTEM**

(71) Applicant: MANN+HUMMEL Ventures Pte. Ltd., Singapore 139234 (SG)
(72) Inventor: JUNGINGER, Bernd, 70565 Stuttgart (DE); THEBAULT, Eric, 71640 Ludwigsburg (DE); WÖBER, Alexander, 71642 Ludwigsburg (DE); RAIMBAULT, Vincent, 3000 Laval (FR)
(74) Representative: Mann + Hummel Intellectual Property

(57) **Abstract**

A system for cleaning environmental air, including a receptable for receive a filter, the filter when installed in the receptacle being instream with a heat radiator of a vehicle in an airstream when air is flowing, the heat radiator for cooling coolant fluid, the coolant fluid for transporting heat from a part of the vehicle to be cooled to the heat radiator. The system includes a controlling circuit for controlling a fan placeable in relation to the radiator so that at least part of the air flow is produced by the fan, when the fan is operating, and to determine if environmental air requires cleaning, and further to, when operate the fan when a vehicle speed is within a speed range of fan influence. The controlling circuit is configured calculate a filter load based on usage time, air quality data, and flow data.

## Description

### Technical Field

The disclosure relates to a system for cleaning environmental air. The disclosure also relates vehicle comprising the system. The disclosure further relates a method of cleaning environmental air and a computer program product including instructions for performing the method.

### Background Art

Due to progressive urbanization, the problem exists that the ambient air can exceed limit values for particulate matter and/or gases such as ozone, NOx, CO many times over, especially in certain weather conditions (no rain, inversion, low wind speeds, no air exchange between altitudes), as a result of industrial waste gases, road traffic and private fireplaces.

The problem of traffic-related emissions has recently been exacerbated by calls for driving bans for certain groups of vehicles, especially diesel cars, in areas of particularly high air pollution due to their NOx and particular matter emissions.

Therefore, there persists the problem to provide for improved air cleaning.

### Summary

An aspect of the disclosure concerns a system for cleaning environmental air. Cleaning air may include the meaning of removing particulate matter from air. The system may include a receptable configured to receive a filter. When the filter is installed in the receptacle and air of an airstream flows through the filter the air stream may also flow through a heat radiator of the vehicle. The heat radiator may be for cooling coolant fluid. The coolant fluid may be for transporting heat from a part of the vehicle to be cooled to the heat radiator. The system may include a controlling circuit for controlling a fan placeable in relation to the radiator so that at least part of the air flow is produced by the fan, when the fan is operating. The controlling circuit may be configured to determine if environmental air requires cleaning, and may be further configured to, when it is determined that environmental air requires cleaning, operate the fan when a vehicle speed is within a speed range of fan influence, this may optimize airflow at low speeds, and maximizing filtering. The controlling circuit may be configured to not operate the fan when a vehicle speed is out of the speed range of fan influence. Thereby power wasting and associated additional pollutant emission may be prevented.

For example, to determine that air requires cleaning it may be determine that air is polluted, or it may be determined that air is polluted and the location is an area requiring air cleaning (e.g. an urban area). In contrast, a determination that air is polluted but the location is an area not requiring air cleaning (e.g., country side, non-urban area) would not require cleaning. In some embodiments, when it is determined that environmental air is polluted, the fan may not be operated even when a vehicle speed is within a speed range of fan influence, with the proviso that urbanization data indicates that a location of the vehicle is not in an area requiring air cleaning, e.g., in the country side. Thus, air cleaning in urban areas may be prioritized.

According to various embodiments, the controlling circuit may be further configured calculating a filter load based on usage time, air quality data, and flow data which is data indicative of an air flow through the filter, or sending usage time, and flow data to a processor for calculating the filter load. The flow data may be based on the vehicle speed when the vehicle speed is out of the speed range of fan influence. The flow data may be based on a fan operation parameter, and optionally the vehicle speed, when the vehicle speed is within the speed range of fan influence. For example, when the vehicle is stationary.

An aspect of the disclosure concerns a vehicle comprising the system.

An aspect of the disclosure concerns an electric or hybrid vehicle including the system of any of the previous claims, wherein the vehicle is an electric or hybrid vehicle, the part of the vehicle is a battery, and the battery is a main battery of the vehicle.

Another aspect of the disclosure concerns a method of cleaning environmental air for an airstream flowing through portion of a vehicle front-end air cooling system including a heat radiator and a filter, the heat radiator for cooling coolant fluid, the coolant fluid for transporting heat from a part of the vehicle to the heat radiator. The method may include, by a controlling circuit including a microprocessor, determining that environmental air requires cleaning. For example, it may be determined that air is polluted, it may be determined that air is polluted and the location is an area requiring air cleaning (e.g. an urban area), in contrast, a determination that air is polluted but the location is an area not requiring air cleaning (e.g. country side, non-urban area) would not require cleaning. The method may include determining that a vehicle speed is within a speed range of fan influence; and, upon said determination, operating the fan. In some embodiments, determining that environmental air is polluted may include obtaining air quality data indicating a pollution level from exterior air, and may further include comparing the pollution level to a pre-determined pollution threshold and determining that the pollution level is higher than the pre-determined pollution threshold. The method may include calculating a filter load based on usage time, air quality data, and flow data which is data indicative of an air flow through the filter, or sending usage time, and flow data to a processor for calculating the filter load. The flow data may be based on the vehicle speed when the vehicle speed is out of the speed range of fan influence. The flow data may be based on a fan operation parameter, and optionally the vehicle speed, when the vehicle speed is within the speed range of fan influence. For example, when the vehicle is stationary.

In another aspect, a system may include a controlling circuit configured to acquire from a regulatory database a sound intensity limit data indicative of the sound intensity limit for a location of a vehicle at current time. The regulatory database may be stored in computer memory of the vehicle or in memory external to the vehicle, e.g., a cloud. The controlling circuit may be configured to limit a rotational speed of the fan to a speed which corresponds to the sound intensity limit.

Another aspect of the disclosure concerns a computer program product including instructions which, when the program is executed by a microprocessor, causes the microprocessor to perform the method of any of the method embodiments described herein.

### Brief Description of Drawings

The drawings show:
FIG. 1A shows a schematic of a system 100 for cleaning environmental air;
FIG. 1B shows an exemplary logic table for controlling the system 100;
FIG. 2 shows the control circuit 120, which may be configured to obtain air quality data 60 ("[AQ]") information related to exterior air;
FIG. 3 shows a schematic of a system 100 configured to receive geolocation data;
FIG. 4 shows an exemplary logic table for controlling the bypass and the shutter of the system 100, according to the vehicle speed;
FIG. 5 shows a schematic of a system 100 configured to receive weather data;
FIG. 6 shows an exemplary logic table for controlling the bypass and the shutter of the system 100;
FIG. 7 shows an exemplary logic table for controlling the fan in accordance with the regulating temperature and battery charge level;
FIG. 8 shows a schematic of a system 100 operably connectable to a regulatory database 90 for receiving sound intensity limit data 92;
FIG. 9 shows a variation of the system of FIG. 8.
FIG. 10 shows an exemplary flowchart of a method 300 of cleaning environmental air;
FIG. 11 shows exemplary details of the determination 320 according to some embodiments;
FIG. 12 shows another embodiment of the method 300 including steps for considering regulating temperature, adverse weather events, vehicle speed, urbanization data, battery charge, and the range of fan influence;
FIG. 13 shows a flowchart of fan operation;
FIGS. 14A and 14B show exemplary flowcharts for the calculation of filter load;
FIG. 15 shows a plot of measured air speed against the vehicle speed of a pre-determined vehicle model; and
FIG. 16 shows a schematic of a system 100 wherein the bypass and shutter are at different positions than shown in FIG. 1;

### Detailed Description

The system as described herein may be implemented in a vehicle. The receptacle (which may include the filter when the filter is installed in the receptacle), the heat radiator, and the fan are arranged, so that when the fan operates air flows through the heat radiator and may further flow through filter when the shutter is open. In a condition wherein the fan, the filter, and the heat radiator are in operation, it may be said that they are in a same airstream, or airstream connected. In some embodiments, the heat radiator may be downstream from the receptacle, such that filtered air flows through the heat radiator. In some embodiments, the fan may be downstream to the receptacle, in other embodiments, the fan may be upstream to the receptacle. In one example, the filter receptacle may be located upstream to the fan, and the fan may be located upstream to the heat radiator.

As used herein and in accordance with various embodiments the terms downstream and upstream are relate to airflow of the airstream, e.g., when air flows from an air intake of the vehicle to an air outlet, then the air intake is upstream from the outlet.

A shutter may be included upstream or downstream of the filter, when the filter is in the receptacle, preferably upstream. The shutter may be in the form of a roller shutter or a blind and, in a closed position, covers an inflow surface of the ambient air to a large extent, for example at least 70%, preferably completely. In some embodiments, the shutter may be arranged close to the filter, for example, within a distance of 1/10 of a larger diagonal filter dimension (e.g., the larger on of a filter height and a filter width for a rectangular filter, wherein the smallest dimension is the thickness). The shutter may be closed when the filter is not in use, e.g., it is necessary to protect the filter, or air filtering is not required thereby reducing unnecessary filter load. The shutter may be controlled electronically, e.g., the controlling circuit may issue a command for the shutter to close (e.g., a command to the shutter, optionally via the electronic control unit (ECU)) or, in other examples, may operate an electromechanical switch.

As used herein and in accordance with various embodiments, open the shutter may include the meaning of keeping shutter open or changing the position of the shutter from closed to open. Close the shutter may include the meaning of keeping shutter closed or changing the position of the shutter from open to close.

The system may include a bypass. The bypass, in an open position, allows airflow to bypass the filter, i.e., not flow through the filter, and yet still flow through the radiator. For example one end of the bypass may be upstream from the filter and the other end of the bypass may be downstream from the filter. In a closed position of the bypass, the airflow through the filter is maximized (for a given fan speed and vehicle speed). In the open position, then most of the airflow bypasses the filter, since the impedance from the filter is much higher and the impedance from the bypass is very low compared to the filter. The open position may include the meaning of fully open. In some embodiments, the bypass may be partially open, therefore controlling the air flow through the filter. A sufficiently large cooling air flow can be made available to the heat exchanger by means of the bypass under certain operating criteria. A switching temperature of the bypass may be designed in such a way that the system connected to the heat exchanger, such as the drive motor, is not thermally damaged under any circumstances. Furthermore, a loading condition of the filter element, *i.e.* the pressure drop across the element, and/or a driving speed of the vehicle may be used as a further switching criterion for the bypass. The bypass may be controlled electronically, e.g., the controlling circuit may issue a command for the bypass to close, open, or partially open (to the bypass, optionally via the ECU) or, in other examples, may operate an electromechanical switch. The fan and the bypass may be so arranged that air flow generated by the fan may pass through a bypass, when the bypass is (at least partially) open.

As used herein and in accordance with various embodiments, open the bypass may include the meaning keeping of keeping the bypass open or changing the position of the bypass from closed to open. Close the bypass may include the meaning of keeping the bypass closed or changing the position of the bypass from open to close. An open bypass may refer to a fully open bypass unless otherwise described.

The system for cleaning air may include, the receptable and the heat radiator, and may further include the filter. The system may include the fan. The system may include the shutter and/or the bypass. The system may include the heat radiator, alternatively, the heat radiator may be part of the vehicle (in which the system is implemented in) but not part of the system. The vehicle may include the battery and the cooling circuit for the coolant fluid.

The vehicle may include the system. The vehicle may be a self driven motor-powered vehicle, for example having 2, 3, 4, or more wheels. Examples of the vehicle are passenger car, truck, buss, lorry, or a rail vehicle, for example a locomotive. The vehicle may include an air inlet opening in a front region, upstream from the system, for allowing air ingress and an air outlet, downstream from the system, for allowing air egress. The air inlet opening behind which the ambient air cleaning device is present may in particular be a cooling air inlet opening and may for example be covered by a radiator grille. For example, this may be at the same level as the front headlights with respect to the vertical axis of the vehicle, or may be located below or above them. The cross-sectional area of the air intake opening may be as large as possible so that the largest possible volume of air can be supplied. In some embodiments, the vehicle may be an electric vehicle or a hybrid (internal combustion engine and electrical) vehicle. In some embodiments, the vehicle may be an internal combustion engine (ICE) vehicle (i.e., non-hybrid). For example, such battery of an ICE vehicle may have a relatively large capacity and may operate the fan for a long time (e.g., 1h) without significant drain even if it is not being charge by an alternator. In some embodiments, the vehicle comprises an internal combustion engine and a cooling fluid temperature (from the hot side) may be used as representation of the engine temperature. In some embodiments, the vehicle comprises a fuel cell and a cooling fluid temperature (from the hot side) may be used as representation of the fuel cell temperature.

The fan may be an electrical fan. The speed range of fan influence is a speed range in which operation of the fan is able to alter the air flow (e.g., the volumetric air flow in m³/s or the mass air flow in kg/s). In other words, out of the speed range of fan influence (within the speed range of non-fan influence) the air flow is substantially determined by the speed of the vehicle and is not alterable by the operation of the fan. Thus, not operating the fan out of the speed range of fan influence saves energy. Speed range of fan influence and the speed range of non-fan influence may be determined by measuring the airstream speed for different vehicle speed with the fan turned at this maximum nominal operation speed. Such measurement may be performed when there is no wind (i.e:, external wind that would influence the measurements) and at a known temperature, e.g., T=30 °C, without any adverse weather event. With these measurements, a threshold of fan influence may be determined. According to various embodiments, the speed range of fan influence may be from 0 km/h until the threshold of fan influence, and speed range of non-fan influence may be from speeds above the threshold of fan influence. The measurements may be performed for a specific car type and a specific fan type. The results of the measurements may be stored in a vehicle's memory (also named herein as computer memory of the vehicle) for later access, for example, the measurements may be stored in processed form as the pre-determined threshold of fan influence, the speed range of fan influence, or the speed range of non-fan influence. The pre-determined threshold of fan influence may be a single value, optionally including a hysteresis. Alternatively, the pre-determined threshold of fan influence may be different values, which depend on the direction of change of the vehicle speed (accelerating or decelerating) and/or may be offset by a hysteresis. The hysteresis may also be stored in the vehicle's memory for later access.

In some embodiments, the speed range of fan influence may be a threshold of fan influence. The fan may be actuated once the threshold is crossed or the threshold and a hysteresis is crossed. Alternatively or in addition, the controlling circuit may be configured such that actuation does not occur within a period of time from a previous actuation, for example by implementing a disable time, or a fixed rate.

As used herein and in accordance with various embodiments, the battery may be a main battery of a hybrid or an electric vehicle, meaning that the battery is used as main source of power for driving. In some embodiments, the battery may be a battery of an ICE vehicle (non-hybrid). For example, such battery of an ICE vehicle may have a relatively large capacity and may operate the fan for a long time (e.g., 1h) without significant drain even if it is not being charge by an alternator.

Battery charging status data may represent a battery charging condition of the battery, for example, it may indicate that the battery is being charged, that the battery is being discharged, or that the battery is inactive. Example of a battery being inactive is not charging, and not discharging, for example, electrically disconnected.

Battery charge state level data may represent the battery charge level, for example, in a percentual, in a unit of energy (e.g., Joule, or Watt-hour). In the percentual representation, 0% may mean that the battery is empty and cannot substantially deliver any energy, and 100% may mean the maximum nominal capacity.

Charging power data may represent the charging power being used to charge the battery, for example a measurement of the power, a nominal value of the power, or of a range. Examples of the nominal value of power are 20 kW, 50 kW, 100 kW, 150 kW, 250 kW, or 350 kW. Examples of the range may be normal (e.g., <= 20 kW), fast (e.g., between and including 22 kW and 100 kW), high power (e.g., >= 150 kW).

Time period required to charge the battery may mean an actual time period to charge the battery until a known charge state, for example a time period to fully charge the battery. In some embodiments, the actual time period required to charge the battery may thus be used as a battery charging parameter. In other embodiments, the battery charging parameter may be a battery temperature.

The battery may be coupled to a heat exchange circuit for allowing ingress of coolant fluid and egress of coolant fluid. When the ingressing coolant fluid temperature is lower than the battery temperature, then the egressing coolant fluid is of higher temperature and carries at least some of the excessive heat thus cooling the battery. The coolant fluid may be cooled down by the heat radiator (which exchanges heat with the air that flows through it). The coolant flow may be generated by a pump. Alternatively, the coolant fluid may flow by phase change, capillary action, centrifugal force, and/or gravity, as is the case, e.g., in a heat pipe.

As used herein and in accordance with various embodiments, the battery may emit heat during discharging and during charging. Such heat is substantially generated by the internal resistance of the battery when current is flowing. The battery may comprise a temperature sensor, for example operable a communication bus of the vehicle so that the battery temperature data representing the battery temperature is assessable by the control circuit. Alternatively, or in addition, the battery temperature (T_{BAT}) may be inferred from the temperature of the coolant (T_{CFH}) (also named herein as hot side), for example, T_{BAT} = T_{CFH} or a fraction thereof.

The temperature of the coolant may be measured on a hot side of a cooling circuit (e.g., a hot side of the radiator) which may be fluid temperature measured at a position between fluid leaving the part (e.g., battery or the engine) and arriving at the heat radiator. The temperature of the coolant may be a coolant fluid temperature leaving the battery.

Battery charging status data, Battery charge state level data, and/or Charging power data may be stored in the vehicle's memory.

The vehicle's memory may be distributed, e.g., in one or more of the control circuit memory, the ECU memory (if separated from the control circuit), a battery internal memory, a filter internal memory, depending on the implemented hardware configuration.

Data in vehicle's memory may be stored continuously or periodically. Data in vehicle's memory may be read continuously or periodically. A memory may be a memory physically encapsulated or monolithic to a microcontroller, or on a separate chip.

Data as used herein and in accordance with various embodiments, may be indicative of a value, for example, a measured value, a status, a counter, a time stamp, or others. Obtaining data and obtaining the value indicated by the data may be used herein interchangeably.

The controlling circuit may be an ECU, however the disclosure is not limited thereto. Alternatively, the controlling circuit may be a separate circuit which is operably connectable with the ECU. In another alternative, the controlling circuit may comprise a separate circuit and an ECU, the separate circuit operably connectable with the ECU. Similarly, the memory may be in one or distributed in more than of abovementioned devices. Operably connectable may include the meaning of connectable via a data communication bus such as CAN bus.

Different data formats or data packets may be used, for example, a battery status register may include one or more of: the battery charge state level data, the battery charging status data, charging power data, and the battery temperature data, or these may be separate in separate registers and/or accessed by separate data packets. For example, obtaining the battery charge state level data, the battery charging status data, the charging power data, and/or the battery temperature data may be carried out in a single step, for example the control circuit may enquire a database or a memory register to provide the respective data.

The controlling circuit may obtain weather data, air quality, and/or air temperature by receiving the data from sensors integrated in (e.g., fixed to) the vehicle, for example upstream of the filter, one or more of the following may be measured: air temperature, air quality data. A rain sensor may also provide may provide rain information.

Air quality data may include one or more of PM10 concentration, PM2.5 concentration, PM1 concentration, relative humidity, VOC concentration, NOx concentration. In various embodiments, air quality data may include at least one particulate matter concentration is measured.

Alternatively or in addition to obtaining data from the sensors of the vehicle, said data (or part thereof) may be obtained from a weather database that is external to the vehicle (e.g., via wireless communication), for example from a cloud. Such weather database may be a weather database, e.g., as it is provided by weather service providers. The wireless communication may be provided by the cellular infrastructure (3G, 4G, 5G, 6G and above), or WIFI. The weather database may provide information such as data representing adverse weather event, and/or air quality data.

Adverse weather event as used herein and in accordance with various embodiments may mean at least one of: snow, rain, sand storm, volcanic ash fall.

The filter may be a particle filter, for example, to filter out (not let pass thought) PM10 particles and above, PM2.5 particles and above, or PM1 particles and above. The filter may be a fine dust filter.

The filter has at least one filter element which may include at least one filter medium which may be folded into at least one filter bellows. The filter may include a plurality of fold stabilizing means which support the filter bellows and are present at a lateral distance of e.g., not more than 150 mm from one another, and for example at least 15 mm from one another, for example 70 mm. It may be provided that the filter medium has an intrinsic bending stiffness of at least 1 Nm², for example, at least 2 Nm². This refers to an intrinsic bending stiffness of the filter medium, *i.e.* in an unprocessed/unfolded state. The filter may comprise pleat stabilizing means. The system may comprise one water separating device.

The depth of the filter element in the longitudinal direction of the vehicle may be less than 150 mm, for example less than 110 mm. The depth is preferably not be less than 15 mm, since otherwise the usable filter area would be very low. In one embodiment of the application, the dimensions of an inflow surface of the ambient air purification device may be, for example, 45 cm (height) x 65 cm (width) for a typical midsize passenger car. Depending on the size of the vehicle, however, significant deviations from this are possible, so that a range of dimensions from 20 cm in width to 120 cm in width and 15 cm in height to 100 cm in height are possible in principle.

The filter medium of the filter element of the ambient air purification device may be a single-layer or multi-layer filter medium, which may be water-resistant. It may be a multi-layer medium comprising at least one drainage layer and/or one pre-separator layer. Alternatively or additionally, the filter medium may comprise or consist of glass fibres and/or plastic fibres, in particular polyester and/or polyethylene. Finally, it may also be provided that the filter medium has a porosity gradient in a thickness direction, preferably in such a way that a pore size decreases in the direction of airflow.

Depending on the design of the filter element (volume flow pressure loss characteristic), it can be achieved in conjunction with the fan that the fine dust emissions of the vehicle are completely compensated by the ambient air cleaning device, so that it is a zero-emission vehicle in terms of dust, e.g., in terms of PM10 or PM2.5. For a typical medium-class passenger car, the total particulate matter emission is about 25 mg/km.

The filter may include a filter frame, for example, at least partially circumferential frame in which the filter element (e.g., filter bellows) is accommodated. In an example, it may be provided that the frame has an L-shaped cross-sectional form, e.g., wherein one leg of the L-shaped cross-section of the frame engages behind the filter bellows of the filter element, and thus supports it counter to the effect of dynamic pressure. The filter may comprise two or more filter elements, and the filter elements may be arranged in (e.g., fixed to) a single filter frame, or alternatively, each filter element may be arranged in a separate frame element of a filter frame.

The filter element may in particular comprise or be a plastic-molded filter element, wherein the at least partially circumferential frame may be connected to the filter medium by a material-to-material bond. However, the invention is not limited to a material connection; as an alternative to the material connection of the filter medium to the frame, it may also be provided that the filter element is merely inserted into the frame, so that it is supported in a form-fitting manner on the rear leg of the L-profile.

The filter may be arranged (and arrangeable) into the receptacle. The receptable may be fixed to the vehicle and may corresponds to the frame of the filter, in which the filter is held, optionally by detachable fastening means, e.g., a clip connection. The receptacle may further be configured to function as a mounting shaft, into which the at least one filter element may be linearly inserted. This makes it easy to replace the filter element, for example from the upper side of a lock carrier of a front hood or from an underbody side which is easily accessible, for example, during servicing on a lifting platform.

In some embodiments, it may further be provided that the filter is arranged with respect to the heat exchanger in such a way that it covers no more than 75% of an incident flow surface of the heat exchanger, so that sufficient residual heat dissipation is possible even when the filter element is loaded. In order to achieve this, the filter element can be arranged offset from the heat exchanger about the vertical and/or transverse direction of the vehicle. The non-covered portion of the heat radiator may form the bypass which may be openable and closeable. In other embodiments, the bypass may be an openable/ closeable air passage which is independent from the heat exchanger surface, and the filter and the heat exchanger may be apart from each other at a distance sufficiently large to allow flow of air through the heat exchanger when the bypass is open, and even when the filter is loaded.

While filter load may be measured using a pressure differential sensor (measuring a pressure difference upstream and downstream the filter), such sensors are costly. Thus, the present disclosure allows for measuring a filter load by the air cooling efficiency, e.g., by measuring a time for during cooling of an engine, or a time for charging a battery which requires cooling. Surprisingly, this method allows for measuring filter load even when the vehicle is not moving, e.g., at the relatively lower pressure differentials generated by the fan, lower as opposed as pressures obtained on a highway. Thus a pressure measurement may not be necessary.

An initial state of a filter may be a new filter, for example an unloaded filter. In some embodiments, the initial state of a filter may be a new filter which is electrostatically loaded. In other embodiments, the initial state of the filter may be a known state with a partial load.

Various embodiments also concerns a system and a method for calculating a filter load estimation in a vehicle (or simply named as calculating filter load). For example, the filter may be a particle filter and the filter load estimation may be a filter dust load estimation. During filtration, which is during the time that air flows through the filter, the usage time and flow data indicative of the air flow for the usage time may be recorded and stored to a historical filter usage database. Furthermore, air quality data may be stored to the historical filter usage database, or may at a later stage be obtained from a separate, pollution database, e.g., by communicating to a service provider. The usage time, air quality data, and flow data may be used to calculate the filter loading, furthermore, the filter characteristics may be used in the calculation, in non-limiting examples, its efficiency and/or efficiency curves. Calculation of filter loading may be carried out by the controlling circuit or by a processor (e.g., server, cloud) external to the vehicle, the latter requiring sending the usage time and flow data, and optionally the air quality data, to the processor.

According to various embodiments, the flow data is based on the vehicle speed and/or the fan operation parameter. The flow data may be further based on shutter and/or bypass position if such are available, since they affect the air flow through the filter. When the vehicle speed is out of the speed range of fan influence, the fan operation parameter may be ignored (e.g., not used) in the calculation which calculation may be based on the vehicle speed. This is because at higher speeds the airflow is dependent on the vehicle speed and less on the fan operation.

The flow data may be based on a fan operation parameter, and optionally the vehicle speed, when the vehicle speed is within the speed range of fan influence. For example, the flow data may be based on a fan operation parameter, and the vehicle speed, when the vehicle speed is within the speed range of fan influence and above a minimum vehicle speed; and the flow data may be based on a fan operation parameter and not on the vehicle speed, when the vehicle speed is below a minimum vehicle speed, for example when the vehicle is stationary.

The fan operation parameter is indicative of the airflow generated by the fan, and in non-limiting examples, may be the frequency of the fan or an operation power of the fan.

Cleaning air may include the meaning of removing particulate matter from air. The system may include a receptable configured to receive a filter. When the filter is installed in the receptacle and air of an airstream flows through the filter the air stream may also flow through a heat radiator of the vehicle. The heat radiator may be for cooling coolant fluid. The coolant fluid may be for transporting heat from a part of the vehicle to be cooled to the heat radiator. The system may include a controlling circuit for controlling a fan placeable in relation to the radiator so that at least part of the air flow is produced by the fan, when the fan is operating. The controlling circuit may be configured to determine if environmental air requires cleaning, and may be further configured to, when it is determined that environmental air requires cleaning, operate the fan when a vehicle speed is within a speed range of fan influence, this may optimize airflow at low speeds, and maximizing filtering. The controlling circuit may be configured to not operate the fan when a vehicle speed is out of the speed range of fan influence. Thereby power wasting and associated additional pollutant emission may be prevented.

For example, to determine that air requires cleaning it may be determine that air is polluted, or it may be determined that air is polluted and the location is an area requiring air cleaning (e.g. an urban area). In contrast, a determination that air is polluted but the location is an area not requiring air cleaning (e.g., country side, non-urban area) would not require cleaning. In some embodiments, when it is determined that environmental air is polluted, the fan may not be operated even when a vehicle speed is within a speed range of fan influence, with the proviso that urbanization data indicates that a location of the vehicle is not in an area requiring air cleaning, e.g., in the country side. Thus, air cleaning in urban areas may be prioritized.

The controlling circuit may include a microprocessor and a computer memory storing instructions to cause a microprocessor to control the fan.

In some embodiments, the system may include the heat radiator and/or the fan, in other embodiments the heat radiator and/or the fan may be part of a vehicle in which the system implemented.

According to various embodiments, the controlling circuit may be configured to obtain air quality data information from exterior air. The controlling circuit may be configured to determine that air is polluted, by comparing the air quality data indicating a pollution level to a pre-determined pollution threshold and determining that the pollution level is higher than the pre-determined pollution threshold.

According to various embodiments, the controlling circuit may be configured to obtain a location of the vehicle. The controlling circuit may be configured to obtain urbanization data indicating whether the location of the vehicle is or is not in an area requiring air cleaning. The controlling circuit may be configured to block air flow through the filter and/or not operate the fan if the urbanization data indicates that the location of the vehicle is not in an area requiring air cleaning. Block air flow through the filter may include the meaning of closing the shutter. Further, the bypass may be open if cooling is necessary. The controlling circuit may be configured to allow air flow through the filter if the urbanization data indicates that the location of the vehicle is in an area requiring air cleaning.

According to various embodiments, the urbanization data may be obtained from a database including a digital representation of a map. For example a digital representation of a map may include a data set of coordinates and urbanization data, in one example, the coordinates may be grid coordinates and the urbanization data may be provided for that grid, in another example, coordinates may indicate road segments and the urbanization data may be provided for road segments. The urbanization data may represent a pre-determined value, non-limiting examples are: (i) urban area or non-urban area; or (ii) a population density in a grid or a pre-determined radius from the location.

According to some embodiments, the controlling circuit may be configured to block air flow through the filter when the vehicle speed is higher than a pre-determined upper speed. Block air flow through the filter may include the meaning of closing the shutter. The pre-determined upper speed may be selected from speeds over 60 km/h, for example the pre-determined upper speed may be 70 km/h. In high speeds (e.g., on highways) the shutter may be closed to optimize the aerodynamic resistance of the vehicle and because in these areas, air cleaning is usually not necessary. Further heat exchange may be sufficient without using the heat radiator, unless the regulating temperature becomes out of the normal operating temperature.

According to various embodiments, the controlling circuit may be configured to protect the filter in case of an adverse weather event. To protect the filter may include obtaining weather data. To protect the filter may include determining if the weather data indicates that an adverse weather event is occurring, e.g., at the present location. To protect the filter may further include blocking air flow through the filter if it is determined that an adverse weather event is occurring.

According to some embodiments, the controlling circuit may be configured to obtain battery charge level data indicating a battery charge level. The controlling circuit may be configured to obtain atemperature data representing a regulating temperature of a part of the vehicle. For example, the temperature of the part of the vehicle may be a battery temperature. Alternatively to using the battery temperature, a coolant temperature may be used. For example, coolant temperature data may indicate a temperature of the coolant on the hot side and the battery temperature may be estimated from the coolant temperature. The controlling circuit may be configured to not operate the fan (e.g., do not turn on, or to turn off the fan operation) if the battery charge level is below a pre-defined reserve charge, and if the regulating temperature is within a pre-defined normal operation temperature range. Such regulation may improve mileage, which is especially important for electrical vehicles. The controlling circuit may be configured to operate the fan (e.g., turn on the fan operation) if the regulating temperature is above the pre-defined normal operation temperature range. Thus, the part to be cooled may be protected from overheating.

According to some embodiments, the controlling circuit may be configured to, if the regulating temperature of the cooling fluid is above a pre-defined critical temperature range, reduce air flow impedance sensed by the airstream. Reducing the air flow impedance sensed by the airstream may include opening the bypass, thereby more air may flow through the radiator to provide improved cooling.

According to various embodiments, the controlling circuit may be configured to obtain location data indicating a location of the vehicle. The controlling circuit may be configured to obtain the current time. The controlling circuit may be configured to acquire from a regulatory database a sound intensity limit data indicative of the sound intensity limit for the location of the vehicle at the current time. The regulatory database may be stored in computer memory of the vehicle or in memory external to the vehicle, e.g., a cloud. The controlling circuit may be configured to limit a rotational speed of the fan to a speed which corresponds to the sound intensity limit.

in some embodiments, the controlling circuit may be configured to communicate with the regulatory database and if communication fails, it may use a default sound intensity limit for the time of the day. For example, if access to a cloud having the regulatory database is interrupted, or if no regulatory information is available for the given location.

The disclosure also concerns a vehicle comprising the system. In some embodiments, the vehicle may be an internal combustion vehicle or a fuel cell vehicle.

The disclosure also concerns an electric or hybrid vehicle including the system according to various embodiments. The vehicle may be an electric or hybrid vehicle. The part of the vehicle may be a battery, and the battery may be a main battery of the vehicle.

A method of cleaning environmental air of an airstream flowing through portion of a vehicle front-end air cooling system including a heat radiator and a filter, the heat radiator for cooling coolant fluid, the coolant fluid for transporting heat from a part of the vehicle to the heat radiator. The method may include, by a controlling circuit including a microprocessor, determining that environmental air requires cleaning. For example it may be determine that air is polluted, it may be determined that air is polluted and the location is an area requiring air cleaning (e.g. an urban area), in contrast, a determination that air is polluted but the location is an area not requiring air cleaning (e.g., country side, non-urban area) would not require cleaning. The method may include determining that a vehicle speed is within a speed range of fan influence (e.g., at a first time); and, upon said determination, operating the fan. In some embodiments, determining that environmental air is polluted may include obtaining air quality data indicating a pollution level from exterior air, and may further include comparing the pollution level to a pre-determined pollution threshold and determining that the pollution level is higher than the pre-determined pollution threshold. The present method allows for optimized filter use, not only increasing the filter lifetime but also increasing the cleaning of air per filter load, since filtration and filter loading is suppressed in conditions where air cleaning is not necessary.

According to various embodiments, the method may include determining, by the controlling circuit, that the vehicle speed if out of the speed range of fan influence and not operating the fan, e.g., at a second time.

As used herein and in accordance with various embodiments, first time and second time are used solely as label to distinguish the method steps in time and are not limiting the method to a certain sequence of events.

According to various embodiments, the method may include obtaining a location of the vehicle. The method may include obtaining urbanization data indicating whether the location of the vehicle is or is not in an area requiring air cleaning. The method may include determining (e.g., at a first time), by the controlling circuit, that the urbanization data indicates that the location of the vehicle is not in an area requiring air cleaning, and blocking air flow through the filter (e.g., closing the shutter). The method may include determining (e.g., at a second time), by the controlling circuit, that the urbanization data indicates that the location of the vehicle is in an area requiring air cleaning and allowing air flow through the filter.

According to various embodiments, the urbanization data may be obtained from a database including a digital representation of a map. For example, a digital representation of a map may include a data set of coordinates and urbanization data, in one example, the coordinates may be grid coordinates and the urbanization data may be provided for that grid, in another example, coordinates may indicate road segments and the urbanization data may be provided for road segments. The urbanization data may represent a pre-determined value, non-limiting examples are: (i) urban area or non-urban area; or (ii) a population density in a grid or a pre-determined radius from the location.

According to various embodiments, the method may include determining, by the controlling circuit, that the vehicle speed is higher than a pre-determined upper speed; and blocking air flow through the filter.

According to various embodiments, the method may include obtaining weather data. The method my include, determining, by the controlling circuit, that the weather data indicates that an adverse weather event is occurring, e.g., at the present location. The method may include blocking air flow through the filter if it is determined that an adverse weather event is occurring.

According to various embodiments, the method may include obtaining battery charge level data indicating a battery charge level. The method may include obtaining a temperature data representing the thermal management temperature of the vehicle, for example a regulating temperature of a part of the vehicle. The method may include determining that the battery charge level is below a pre-defined reserve charge. The method may include determining that the regulating temperature is within a pre-defined normal operation temperature range. The method may include not operate the fan. In an example, the temperature of the part of the vehicle may be a battery temperature. Alternatively to using the battery temperature, a coolant temperature may be used. For example, coolant temperature data may indicate a temperature of the coolant on the hot side and the battery temperature may be estimated from the coolant temperature.

According to various embodiments, the method may include determining that the temperature of the cooling fluid is above the pre-defined normal operation temperature range; and operating the fan (e.g., turn on the fan operation).

According to various embodiments, the method may include determining that the regulating temperature is above a pre-defined critical temperature range, and reducing air flow impedance sensed by the airstream. Reducing the air flow impedance sensed by the airstream may include opening the bypass, thereby more air may flow through the radiator to provide improved cooling.

According to various embodiments, the method may include obtaining location data indicating a location of the vehicle. The method may further include obtaining the current time. The method may further include acquiring from a regulatory database a sound intensity limit data indicative of the sound intensity limit for the location of the vehicle at the current time. The method may further include limiting a rotational speed of the fan to a speed which corresponds to the sound intensity limit.

The regulatory database may be stored in computer memory of the vehicle or in memory external to the vehicle, e.g., a cloud. In some embodiments, the method may include trying to communicate with the regulatory database, determining that communication has failed, and use a default sound intensity limit for the time of the day. For example, if access to a cloud having the regulatory database is interrupted, or if no regulatory information is available for the given location the applicable sound intensity limit would be the default sound intensity limit.

The present disclosure also concerns a computer program product including instructions which, when the program is executed by a microprocessor, causes the microprocessor to perform the method of any of the method embodiments described herein.

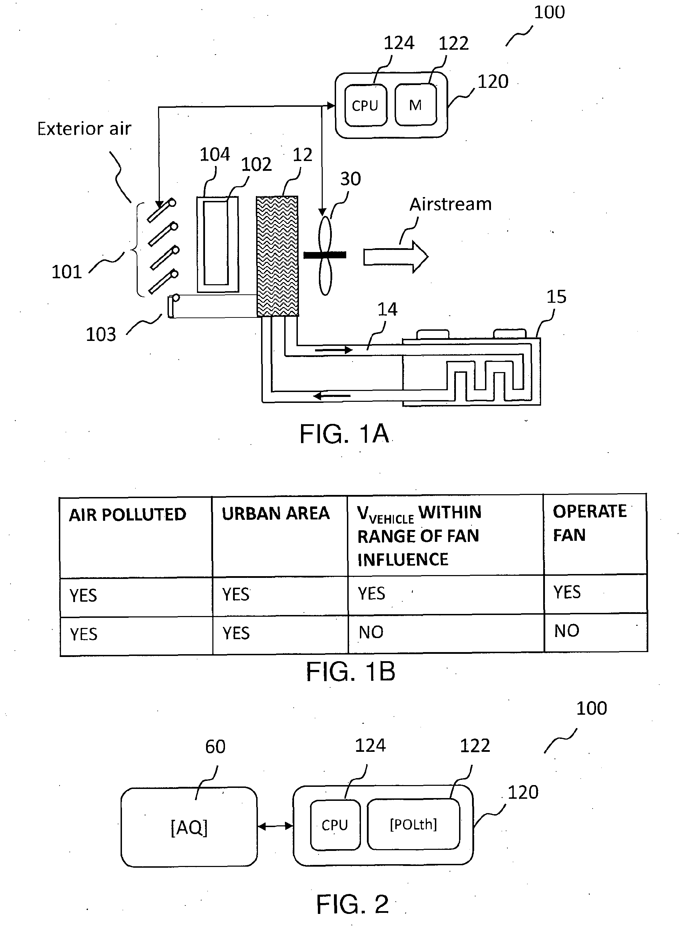

FIG. 1A shows a schematic of a system 100 for cleaning environmental air. The schematic is simplified for easier explanation of the disclosure. The system 100 may include a receptable 104 configured to receive a filter 102. As can be seen, when filter 102 is installed in the receptacle 104, the filter is instream with the heat radiator 12 of a vehicle 10 when air is flowing. Instream as used herein and in accordance with various embodiments means in a common air stream. The heat radiator 12 being for cooling coolant fluid 14, the coolant fluid 14 for transporting heat from a part of the vehicle to be cooled (e.g., battery 15) of the vehicle 10 to the heat radiator 12. A fan 30 may be placeable in the air stream and configured to generate air flow, so that at least part of the air flow is produced by the fan 30, when the fan 30 is operating.

The system 100 may include a controlling circuit 120 for controlling the fan 30 placeable. The controlling circuit 120 may include a microprocessor 124 and a computer memory 122 storing instructions to cause a microprocessor 124 to control the fan 30.

The controlling circuit 120 may be configured to determine if environmental requires cleaning, and (i) when it is determined that environmental air requires cleaning, operate the fan 30 when a vehicle speed 11 is within a speed range of fan influence thereby optimizing airflow at low speeds, and improving filtering; and (ii) not operate the fan 30 when a vehicle speed 11 is out of the speed range of fan influence, thereby reducing power wasting and associated additional pollutant (particular matter) emission, by car. In various embodiments, a time delay or a speed hysteresis may be used, thereby avoiding switching the fan on/off too often when the vehicle speed is at a threshold speed or fan influence. The system may further include the filter 102. The system may include a shutter 101. The system may include, a bypass 103.

FIG. 1B shows an exemplary logic table for controlling the system 100. The logic may be programmed into the controlling circuit 120. The input columns "AIR POLUTTED", "URBAN AREA" and "VVEHICLE WITHIN RANGE OF FAN INFLUENCE" may all be combined by logical AND thus resulting in the instructions to operate the fan under the column "OPERATE FAN". The data "URBAN AREA" may be urbanization data 72 indicating whether the location of the vehicle 10 is or is not in an area requiring air cleaning.

FIG. 2 shows the control circuit 120, which may be configured to obtain air quality data 60 ("[AQ]") information related to exterior air. In examples, said air quality data may be obtained from sensors onboard of the vehicle, in other examples, said air quality data may be obtained from a server remote from the vehicle, e.g., a cloud. The control circuit 120 may be configured to determine that air is polluted, e.g., by comparing the air quality data 60 indicating a pollution level to a pre-determined pollution threshold POLth. The control circuit 120 may be configured to determine that the pollution level is higher than the pre-determined pollution threshold POLth. The pre-determined pollution threshold POLth may be stored in the memory 122.

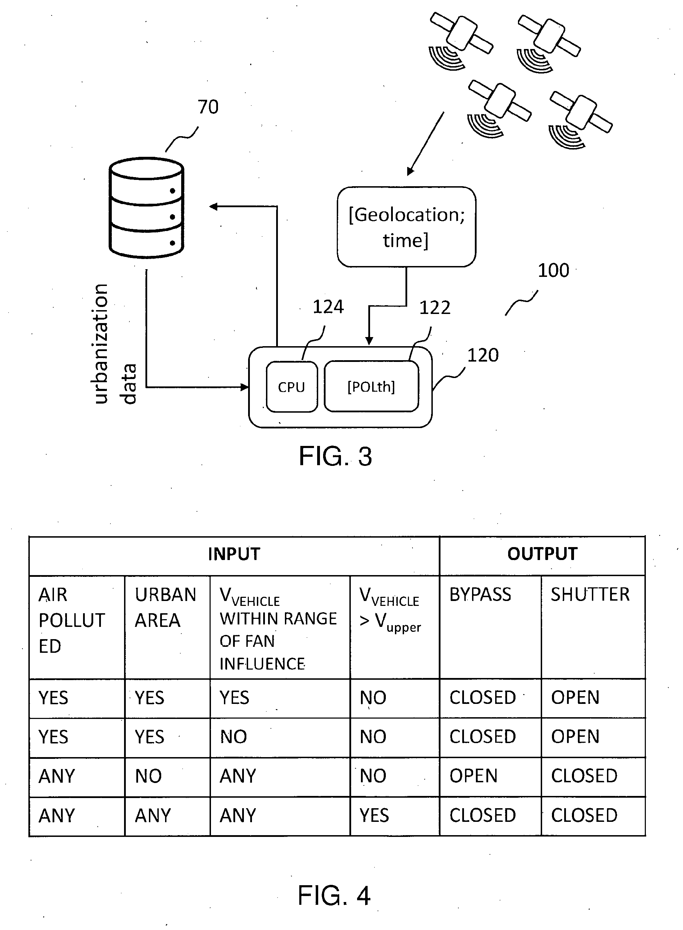

According to various embodiments, the system 100 may receive geolocation data as schematically represented in FIG. 3. The controlling circuit 120 may be configured to obtain a location of the vehicle 10, e.g., GPS, Beidou, Glonass, and/or Galileo coordinates. The location may include a time stamp "[Geolocation; time]" and/or storing may be at fixed and known rate. The controlling circuit 120 may be configured to obtain urbanization data 72 indicating whether the location of the vehicle 10 is or is not in an area requiring air cleaning. The urbanization data may be obtaining from a database 70 comprising a digital representation of a map. The controlling circuit 120 may be configured to block air flow through the filter 102 and/or not operate the fan if the urbanization data 72 indicates that the location of the vehicle 10 is not in an area requiring air cleaning. The controlling circuit 120 may be configured to allow air flow through the filter 102 if the urbanization data 72 indicates that the location of the vehicle 10 is in an area requiring air cleaning.

According to various embodiments, the controlling circuit 120 may be configured to block air flow through the filter 102 when the vehicle speed 11 is higher than a pre-determined upper speed. FIG. 4 shows an exemplary logic table for controlling the bypass and the shutter of the system 100, according to the vehicle speed. The logic may be programmed into the controlling circuit 120.

When the vehicle speed is lower than the pre-determined upper speed ("V_{VEHICLE} > Vᵤₚₚₑᵣ"=NO), the vehicle is in a location that requires air cleaning ("URBAN AREA" = YES) and air is polluted ("AIR POLUTTE" = YES) then the bypass is closed and the shutter is open, thereby the filter being in operation.

When the vehicle is not in a location that requires air cleaning ("URBAN AREA" = NO) then the determination if air is polluted may be ignored. And provided that also the vehicle speed is not higher than the pre-determined upper speed ("V_{VEHICLE} > Vᵤₚₚₑᵣ"=NO) the bypass may be open and the shutter may be closed irrespective of the determination of the vehicle speed being or not within the range of fan influence "V_{VEHICLE} WITHIN RANGE OF FAN INFLUENCE".

When the vehicle speed is higher than the pre-determined upper speed ("V_{VEHICLE} > Vᵤₚₚₑᵣ"=YES), the other 3 input variables may be ignored and the shutter may be closed. In some embodiments, the bypass may be open, in other embodiments, the bypass may be closed, since the speed of the vehicle may provide sufficient airflow around the vehicle for cooling, and the radiator may not be required. Further closing the bypass improves vehicle's aerodynamic. "ANY" as used in the tables may mean that it may be ignored as input and is used for ease of reference, even though, for example if V_{VEHICLE} > Vᵤₚₚₑᵣ then the speed is always out of the range of fan influence ("V_{VEHICLE} WITHIN RANGE OF FAN INFLUENCE"=NO). The control circuit 120 may not operate the fan when V_{VEHICLE} > Vᵤₚₚₑᵣ.

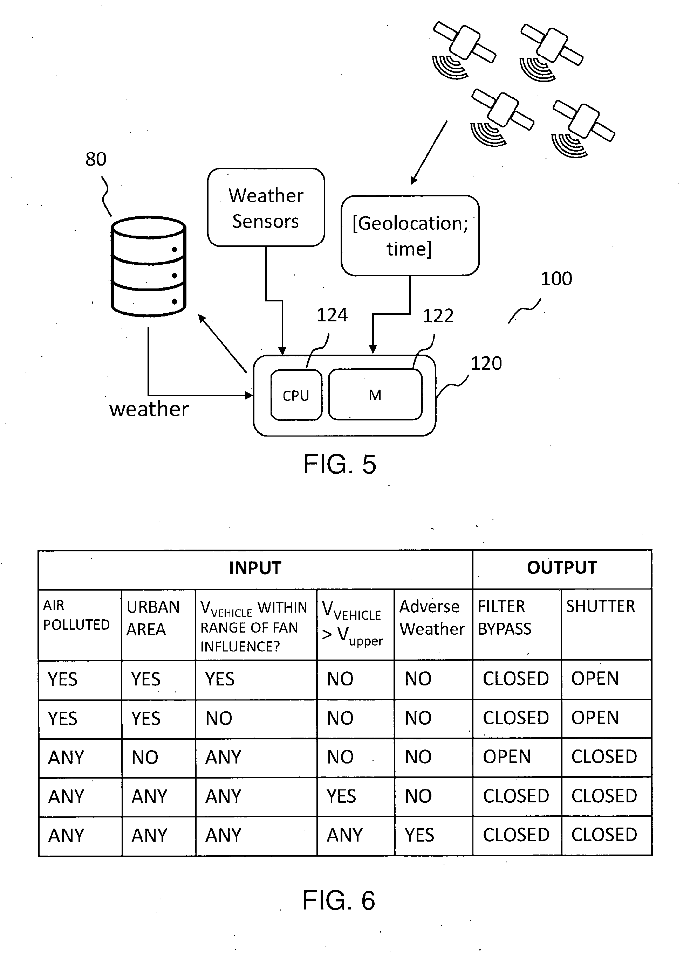

According to various embodiments, the system 100 may receive weather data as schematically represented in FIG. 5. The controlling circuit 120 may be configured to obtain a location of the vehicle 10, e.g., GPS, Beidou, Glonass, and/or Galileo coordinates. The location may include a time stamp "[Geolocation; time]" and/or storing may be at fixed and known rate. The controlling circuit 120 may be configured to obtain weather data 80 indicating whether the location of the vehicle 10 is or is not in an area requiring air cleaning. The controlling circuit 120 may be configured to determine if the weather data 80 indicates that an adverse weather event is occurring, e.g., at the present location. The controlling circuit 120 may be configured to block air flow through the filter 102 if it is determined that an adverse weather event is occurring, thus protecting the filter 102 from damage from an adverse weather event.

FIG. 6 shows an exemplary logic table for controlling the bypass and the shutter of the system 100 which is identical to the logic of FIG. 4 except that the adverse weather condition is further used as input. The logic may be programmed into the controlling circuit 120. The logic is the same explained in connection for FIG. 4 provided there is no adverse weather event ("Adverse Weather" = NO). When there is an adverse weather event ("Adverse Weather" = YES) then the shutter is closed independently from any of the other input parameters to protect the filter. The bypass may be closed again, thus improving lifetime of the filter.

According to various embodiments, the controlling circuit 120 may be configured to obtain battery charge level data 56 indicating a battery charge level, and to obtain a temperature data representing a regulating temperature of a part of the vehicle. According to various embodiments, the controlling circuit 120 may be configured to not operate the fan 30 if the battery charge level is below a pre-defined reserve charge, and if the regulating temperature is within a pre-defined normal operation temperature range. This may improve mileage for e-vehicles. The controlling circuit 120 may be configured to operate the fan 30 if the regulating temperature is above the pre-defined normal operation temperature range. If the regulating temperature is above a pre-defined critical temperature, the controlling circuit 120 may open the bypass and operate the fan. The pre-defined critical temperature is above an upper limit of the pre-defined normal operation temperature range.

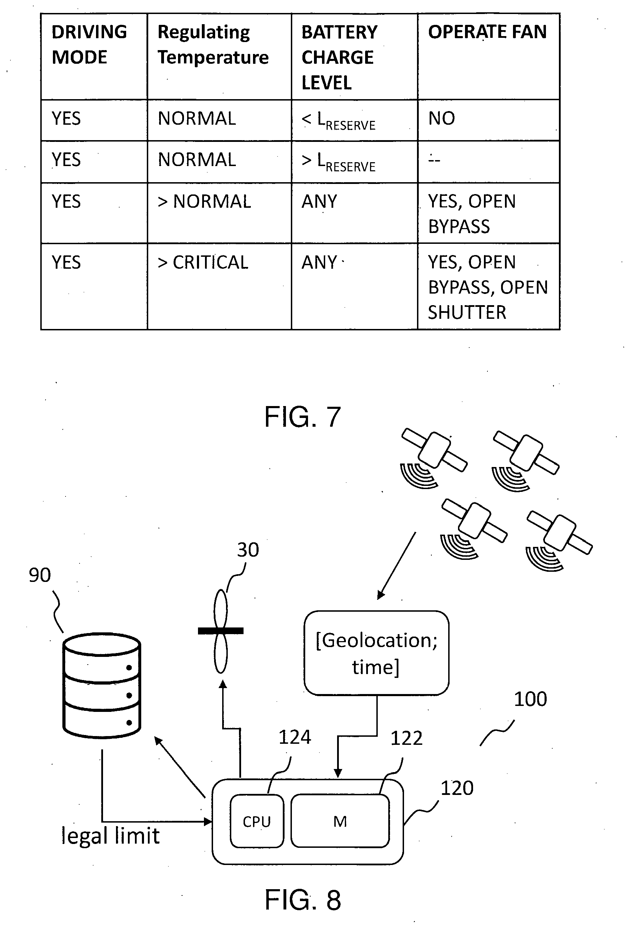

FIG. 7 shows an exemplary logic table for controlling the fan in accordance with the regulating temperature and battery charge level. For regulating temperature is within a pre-defined normal operation temperature range ("NORMAL"), the fan may be not operated when the battery charge level is smaller than the reserve level ("BATTERY CHARGE LEVEL < L_{RESERVE}"), and when the battery charge level is above the reserve level ("BATTERY CHARGE LEVEL > L_{RESERVE}"), the fan operation may be remain unchanged, for example, is some embodiments, it remain according to the logic shown in FIG. 1B.

In some embodiments, when the regulating temperature is above a pre-defined normal operation temperature range ("> NORMAL") the fan may be operated irrespective of the battery charge level, the bypass may be open to improve cooling. The shutter may also be opened thus further improving cooling.

In some embodiments, when the regulating temperature is above a critical temperature ("> CRITICAL") the fan may be operated irrespective of the battery charge level, furthermore, each of the bypass and the shutter may be open. Thereby reducing the impedance of the airflow caused by the filter and improving cooling at the heat radiator and thus maximizing airflow through the heat radiator. The opening of the bypass and shutter under this condition of the regulating temperature being above a critical temperature may override any other controlling logic. Thereby the part to be cooled may be protected from damage due to overheating.

In some embodiments, when the vehicle is moving, this fan control logic may by executed when the vehicle speed is within the range of fan influence, and the fan may not be operated when the vehicle speed is out of the range of fan influence.

According to various embodiments, the controlling circuit 120 may be configured to if the regulating temperature of the cooling fluid is above a pre-defined critical temperature range, reduce air flow impedance sensed by the airstream, for example, by opening bypass, more air is passing the radiator to provide a sufficient cooling.

According to various embodiments, the system 100 may by operably connectable to a regulatory database 90 for receiving sound intensity limit data 92 as schematically represented by FIG. 8. The controlling circuit 120 may be configured to obtain location data indicating a location of the vehicle 10. The controlling circuit 120 may be configured to obtain the current time (e.g., from the geolocation data). The controlling circuit 120 may be configured to acquire from a regulatory database 90 a sound intensity limit data 92 indicative of the sound intensity limit for the location of the vehicle 10 at the current time. The controlling circuit 120 may be configured to limit a rotational speed of the fan 30 to a speed which corresponds to the sound intensity limit.

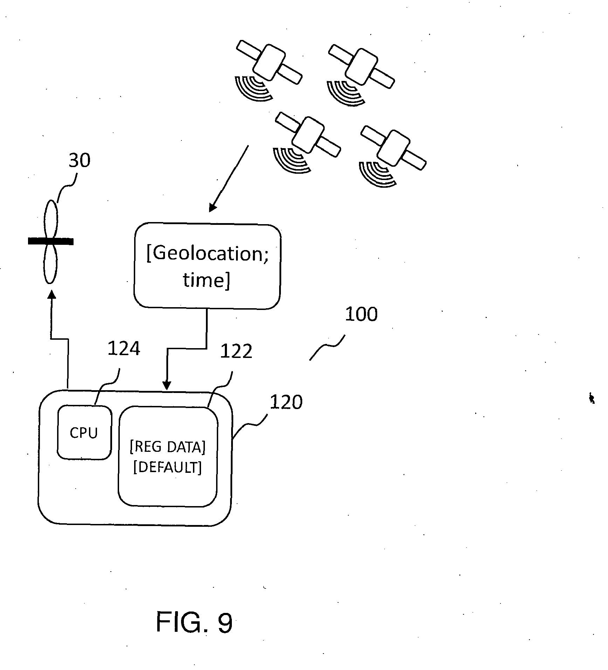

If access to the regulatory database 90 fails (e.g., due to lack of internet connection to a cloud), or if the regulatory database does not have the sound intensity limit data 92 for the current location, a default value ("[DEFAULT]") may be used for the sound intensity limit data 92. In one example shown in FIG. 9, said default value may be stored in a vehicle memory, e.g., a memory 122 of controlling circuit 120. in some embodiments, the regulatory database 90 ("[REG DATA"]) may be stored in a vehicle memory, e.g., a memory 122 of controlling circuit 120.

According to various embodiments, the regulatory database 90 and the urbanization database 70 may be a single database. Further, data required from external services may be consolidated, for example, sound intensity limit data, urbanization data, weather data may be obtained from a single service external to the vehicle, e.g., via internet.

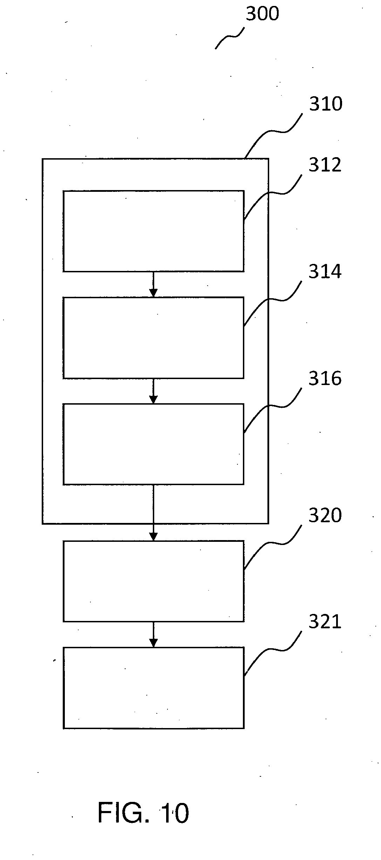

FIG. 10 shows an exemplary flowchart of a method 300 of cleaning environmental air for an airstream flowing through portion of a vehicle 10 front-end air cooling system. The system may include a heat radiator 12 and a filter, the heat radiator 12 for cooling coolant fluid 14, the coolant fluid 14 for transporting heat from a part of the vehicle 10 to the heat radiator 12. The method 300 may include, by the controlling circuit 120 determining, 310 that environmental air requires cleaning. The method 300 may include, by the controlling circuit 120, determining 320 that a vehicle speed 11 is within a speed range of fan influence. The method 300 may include, upon said determination, operating 321 the fan 30. Determining 310 that environmental air requires cleaning may include obtaining 312 air quality data 60 indicating a pollution level from exterior air, and may further include comparing 314 the pollution level to a pre-determined pollution threshold and determining 316 that the pollution level is higher than the pre-determined pollution threshold.

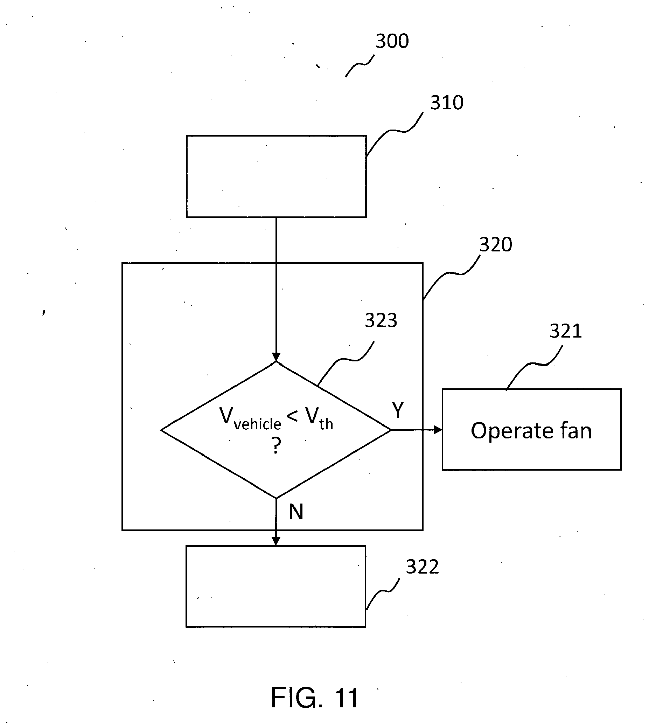

FIG. 11 shows exemplary details of the determination 320 according to some embodiments. The vehicle speed (V_{vehicle}) may be compared to a threshold of fan influence (Vth), and if the vehicle speed is less than the threshold of fan influence (Vth), the method may proceed to operate 321 the fan, otherwise the method may proceed to not operate the fan. For example, at a first time, it may be determining 323, by the controlling circuit 120, that the vehicle speed 11 if within the speed range of fan influence and the fan may be operated 321, and at a second time, it may be determined that the vehicle speed 11 if out of the speed range of fan influence and the fan may not be operated 322.

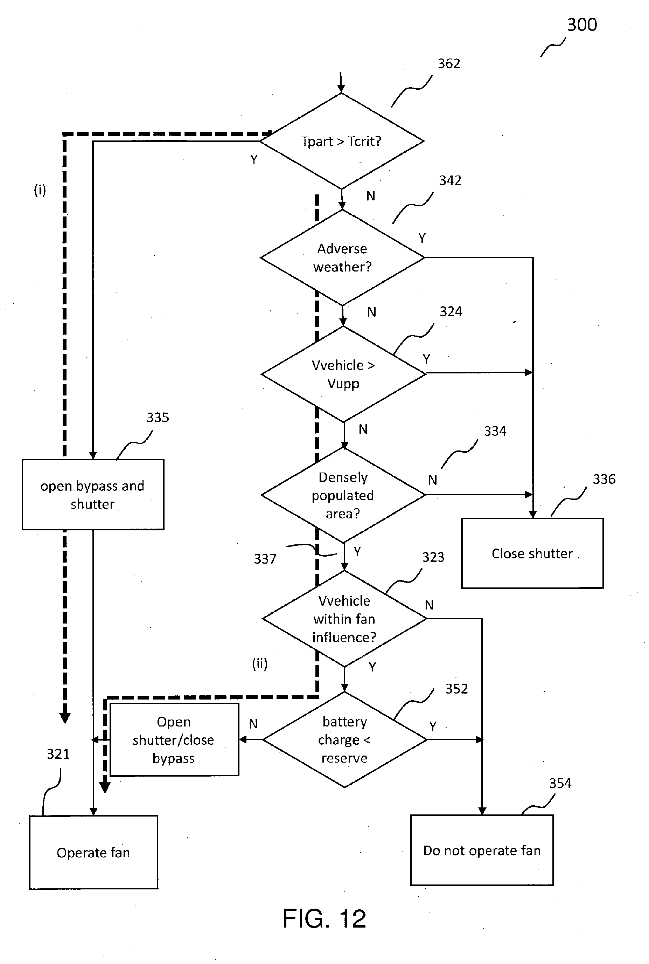

FIG. 12 shows another embodiment of the method 300 including steps for considering regulating temperature, adverse weather events, vehicle speed, urbanization data, battery charge, and the range of fan influence, however various embodiments of the disclosure are not limited thereto, and some or all of the steps may be implemented. The method 300 may include obtaining 330 a location of the vehicle 10. The method 300 may include obtaining 332 urbanization data 72 indicating whether the location of the vehicle 10 is or is not in an area requiring air cleaning. Urbanization data 72 may be obtained from a database 70, e.g., including a digital representation of a map.

The method 300 may include determining 364 that the temperature of the cooling fluid is above the pre-defined normal operation temperature range; and operating 365 the fan 30. In some embodiments operating 321 the fan 30 may be conditional to the vehicle speed being within the range of fan influence.

The method 300 may include (see flow (i)) determining 362 that the regulating temperature (Tₚₐᵣₜ) is above a pre-defined critical temperature (T_{crit}); operating 321 the fan 30; and reducing 335 air flow impedance sensed by the airstream (e.g., opening the bypass and/or opening the shutter).

The method 300 may include determining 334 (e.g., at a first time), by the controlling circuit 120, that the urbanization data 72 indicates that the location of the vehicle 10 is not in an area requiring air cleaning, and blocking 336 air flow through the filter 102, e.g., blocking the shutter. The method 300 may include determining 337 (e.g., at a second time), by the controlling circuit 120, that the urbanization data 72 indicates that the location of the vehicle 10 is in an area requiring air cleaning and allowing air flow through the filter 102, e.g., if other required conditions are satisfied.

The method 300 may include determining 324, by the controlling circuit 120, that the vehicle speed 11 is higher than a pre-determined upper speed; and blocking 336 air flow through the filter 102.

The method 300 may include obtaining 340 weather data (8). The method 300 may further include determining 342, by the controlling circuit 120, if (or that) the weather data 80 indicates that an adverse weather event is occurring (e.g., at the present location). The method 300 may further include blocking 336 air flow through the filter 102 if it is determined that an adverse weather event is occurring.

The method 300 may include determining 323 whether the vehicle speed (V_{vehicle}) is within a range of fan influence, and if not ("N") to not operate the fan, and optionally, to close the bypass. If the vehicle speed is vehicle speed (V_{vehicle}) is within the range of fan influence ("Y") the method 300 may proceed to operate the fan 321 or, if implemented, the method 300 may proceed to determining 352 whether the battery charge level is below a pre-defined reserve charge; and if determination is positive, do not operate 354 the fan, and, optionally open the bypass. Thereby saving reserve energy and, for e-vehicles, improving mileage. If the determination 352 is negative, the method may proceed to open the shutter and close the bypass and operate 321 the fan, thereby cleaning the environmental air (flow (ii)). Another check (not shown in the flowchart) for the regulating temperature may be implemented to check whether the regulating temperature is within a pre-defined normal operation temperature range; and, not operate 354 the fan 30 only if the temperature is normal and otherwise operate the fan. Obtaining 350 battery charge level data 56 indicating a battery charge level and obtaining a temperature data representing a regulating temperature of a part of the vehicle may be implemented at any stage of the method 300 provided that the information is available for a determination using said information.

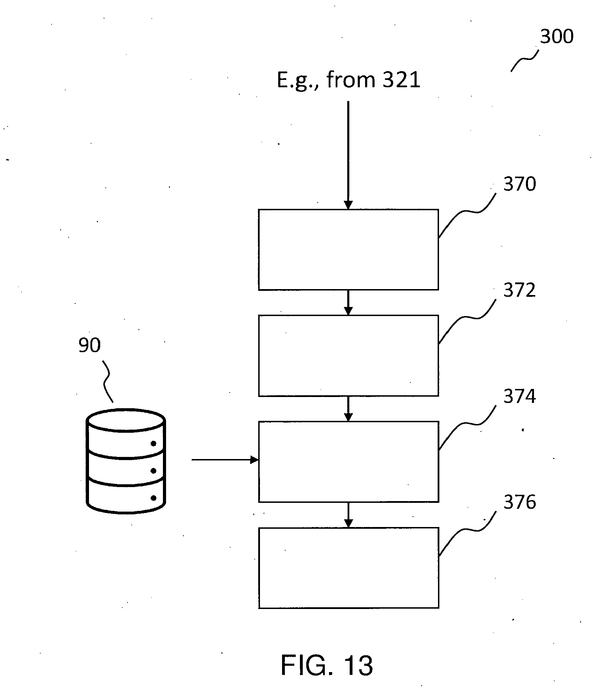

FIG. 13 shows a flowchart of fan operation, for example continuing and including step 321 shown in FIG. 12, but not limited thereto. An exemplary starting condition for this flowchart is that fan is operating or it is determined that fan operation should start. The method 300 may further include obtaining 370 location data indicating a location of the vehicle 10. The method 300 may further include obtaining 372 the current time. The method 300 may further include acquiring 374 from a regulatory database 90 a sound intensity limit data 92 indicative of the sound intensity limit for the location of the vehicle 10 at the current time. The method 300 may further include limiting 376 a rotational speed of the fan 30 to a speed which corresponds to the sound intensity limit.

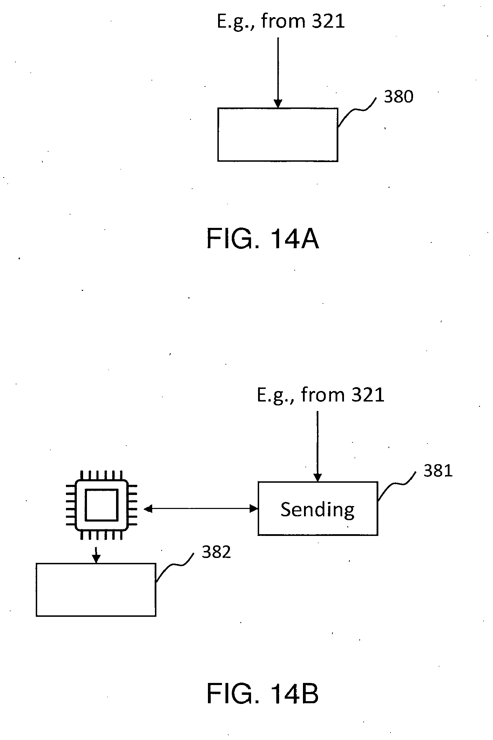

FIG. 14A shows a flow chart of calculating 380 a filter load based on usage time, air quality data, and flow data. Flow data is data indicative of an air flow through the filter. The flow data may be based on the vehicle speed when the vehicle speed is out of the speed range of fan influence, and not on the fan operation parameter. The flow data may be based on a fan operation parameter, and optionally the vehicle speed, when the vehicle speed is within the speed range of fan influence. This calculating 380 the filter load may be carried out, for example, after step 321, or in another example, may be carried out independently, for example, by request. The examples are non-limiting.

FIG. 14B shows a flow chart of sending 381 usage time and flow data to a processor for calculating 382 the filter load. The flow data may be based on the vehicle speed (and not on the fan operation parameters) when the vehicle speed is out of the speed range of fan influence. The flow data may be based on a fan operation parameter, and optionally the vehicle speed, when the vehicle speed is within the speed range of fan influence. Said sending 381 and/or calculating 382 may be carried out, for example, after step 321, or in another example, may be carried out independently, for example, by request. The examples are non-limiting.

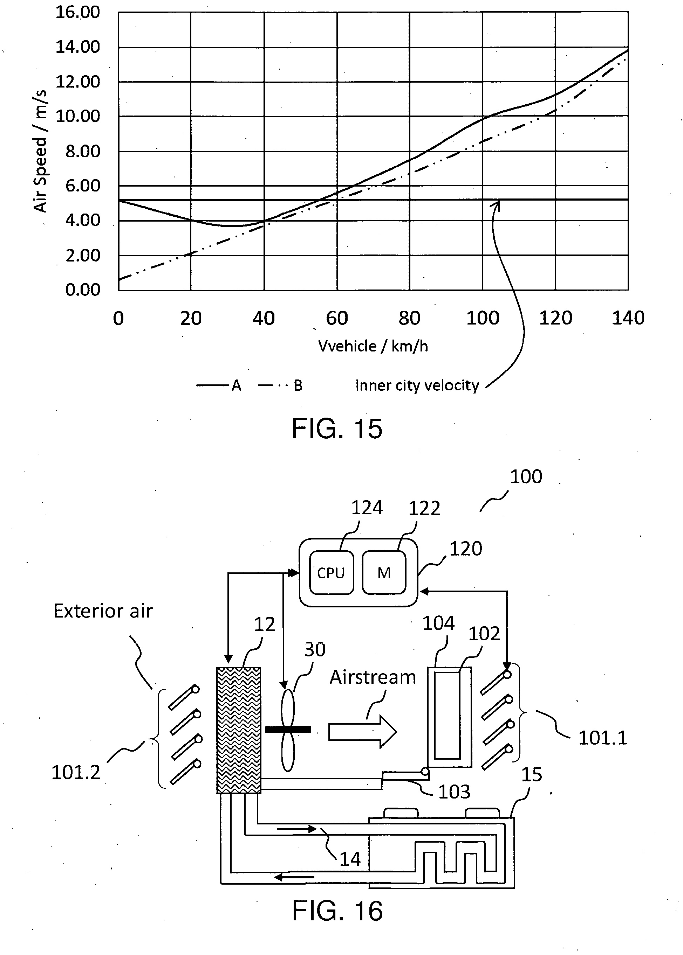

FIG. 15 shows a plot of measured air speed against the vehicle speed of a pre-determined vehicle model, wherein the fan was working (A) at a known state (in this case the maximum nominal speed) and the fan being off (B). As can be seen, above 40 km/h there is substantially no influence from the fan in the air speed. Thus the range of fan influence is for vehicles speeds of 0 km/h, in this exemplary case 40 km/h. 40 km/h is the threshold over which the fan does not influence the speed of airflow.

FIG. 16 shows a schematic of a system 100 wherein the bypass and shutter are at different positions than shown in FIG. 1. The schematic is simplified for easier explanation of the disclosure. The system 100 may include a receptable 104 configured to receive a filter 102. As can be seen, when filter 102 is installed in the receptacle 104 it is in stream with a heat radiator 12 of a vehicle 10 in an airstream when air is flowing through the filter. The heat radiator 12 being for cooling coolant fluid 14, the coolant fluid 14 for transporting heat from a part of the vehicle to be cooled (e.g., battery 15) of the vehicle 10 to the heat radiator 12. A fan 30 may be positioned downstream from the radiator 12 and upstream from the filter 102, for generating air flow. The system may include a computer memory 122 storing instructions to cause the microprocessor 124 to carry out the method 200 of any of the previous claims. In this embodiment the shutter may be include 2 shutters, namely a filter shutter 101.2 and an aerodynamic shutter 101.2.

The filter shutter 101.2 and an aerodynamic shutter 101.2 may be controlled (and the control circuit 102 may be configured accordingly), both using the same logic described in accordance with various embodiments, with the following differences:
(A) when the vehicle speed is higher than the pre-determined upper speed ("V_{VEHICLE} > Vᵤₚₚₑᵣ"=YES in FIG. 4), the aerodynamic shutter 101.2 may be closed, the filter shutter 101.1 may also be closed or may left unchanged (or open). If cooling is required, then the aerodynamic shutter 101.2 may be open, further filter shutter 101.1 may also be open.
(B) when there is adverse weather event, ("Adverse Weather" = YES in FIG. 6) then the aerodynamic shutter 101.2 may be closed, the filter shutter 101.1 may also be closed or may left unchanged, preferably closed. If cooling is required, then the aerodynamic shutter 101.2 may be open, but the filter shutter 101.1 may be closed for filter protection.
(C) when driving, and the regulating temperature is above the normal range, then the aerodynamic shutter 101.2 may be open, and the filter shutter 101.1 may be closed for filter protection or open to improve cooling. When the regulating temperature is above the critical temperature, the aerodynamic shutter 101.2 and filter shutter 101.1 are open.

## Claims

1. A system (100) for cleaning environmental air, comprising:
- a receptable (104) configured to receive a filter (102), so that the filter (102) when installed in the receptacle (104) is instream with a heat radiator (12) of a vehicle (10) when air is flowing, the heat radiator (12) for cooling coolant fluid (14), the coolant fluid (14) for transporting heat from a part of the vehicle (10) to be cooled to the heat radiator (12);
- a controlling circuit (120) for controlling a fan (30) placeable in relation to the radiator (12) so that at least part of the air flow is produced by the fan (30), when the fan (30) is operating;
- wherein the controlling circuit (120) is configured to:
- determine if environmental requires cleaning;
- when it is determined that environmental air requires cleaning, operate the fan (30) when a vehicle speed (11) is within a speed range of fan influence; and
- not operate the fan (30) when a vehicle speed (11) is out of the speed range of fan influence
- obtain air quality data (60) information from exterior air; and
- determine if environmental requires cleaning, by comparing the air quality data (60) indicating a pollution level to a pre-determined pollution threshold and determining that the pollution level is higher than the pre-determined pollution threshold;
- calculating (380) a filter load based on usage time, air quality data, and flow data which is data indicative of an air flow through the filter, or sending (381) usage time, and flow data to a processor for calculating (382) the filter load; wherein
the flow data is based on the vehicle speed when the vehicle speed is out of the speed range of fan influence; and
the flow data is based on a fan operation parameter, and optionally the vehicle speed, when the vehicle speed is within the speed range of fan influence.

2. The system (100) of claim 1, wherein
the flow data is based on a fan operation parameter, and the vehicle speed, when the vehicle speed is within the speed range of fan influence and above a minimum vehicle speed; and
the flow data is based on a fan operation parameter and not on the vehicle speed, when the vehicle speed is below a minimum vehicle speed, for example when the vehicle is stationary.

3. The system (100) of claim 1 or claim 2, wherein the controlling circuit (120) is configured to:
- obtain a location of the vehicle (10);
- obtain urbanization data (72) indicating whether the location of the vehicle (10) is or is not in an area requiring air cleaning, wherein the urbanization data (72) is obtained from a database (70) comprising a digital representation of a map;
- block air flow through the filter (102) and/or not operate the fan if the urbanization data (72) indicates that the location of the vehicle (10) is not in an area requiring air cleaning; and
- allow air flow through the filter (102) if the urbanization data (72) indicates that the location of the vehicle (10) is in an area requiring air cleaning.

4. The system (100) of any of the previous claims, wherein the controlling circuit (120) is configured to:
- block air flow through the filter (102) when the vehicle speed (11) is higher than a pre-determined upper speed.

5. The system (100) of any of the previous claims, wherein the controlling circuit (120) is configured to protect the filter (102) in case of an adverse weather event selected from at least one of: snow, rain, sand storm, volcanic ash fall, and wherein to protect the filter (102) comprises:
- obtaining weather data (80);
- determining if the weather data (80) indicates that an adverse weather event is occurring;
- and blocking air flow through the filter (102) if it is determined that an adverse weather event is occurring.

6. The system (100) of any of the previous claims, wherein the controlling circuit (120) is configured to:
- obtain battery charge level data (56) indicating a battery charge level;
- obtain a temperature data representing a regulating temperature of a part of the vehicle;
- not operate the fan (30) if the battery charge level is below a pre-defined reserve charge, and if the regulating temperature is within a pre-defined normal operation temperature range; and
- operate the fan (30) if the regulating temperature is above the pre-defined normal operation temperature range.

7. The system (100) of claim 6, wherein the controlling circuit (120) is configured to:
- if the regulating temperature of the cooling fluid is above a pre-defined critical temperature range, reduce air flow impedance sensed by the airstream.

8. The system (100) of any of the previous claims, wherein the controlling circuit (120) is configured to:
- obtain location data indicating a location of the vehicle (10);
- obtain the current time;
- acquire from a regulatory database (90) a sound intensity limit data (92) indicative of the sound intensity limit for the location of the vehicle (10) at the current time;
- limiting a rotational speed of the fan (30) to a speed which corresponds to the sound intensity limit.

9. An electric or hybrid vehicle (10) comprising the system (100) of any of the previous claims, wherein the part of the vehicle (10) is a battery (15), and the battery (15) is a main battery of the vehicle (10).

10. A method (300) of cleaning environmental air for an airstream flowing through portion of a vehicle (10) front-end air cooling system comprising a heat radiator (12) and a filter, the heat radiator (12) for cooling coolant fluid (14), the coolant fluid (14) for transporting heat from a part of the vehicle (10) to the heat radiator (12), the method (300) comprising, by a controlling circuit (120) comprising a microprocessor (124):
- determining (310) that environmental air requires cleaning;
- determining (320) that a vehicle speed (11) is within a speed range of fan influence; and,
- upon said determination, operating (321) the fan (30);
- calculating a filter load based on usage time, air quality data, and flow data which is data indicative of an air flow through the filter, or sending usage time, and flow data to a processor for calculating the filter load; wherein
the flow data is based on the vehicle speed when the vehicle speed is out of the speed range of fan influence; and
the flow data is based on a fan operation parameter, and optionally the vehicle speed, when the vehicle speed is within the speed range of fan influence;
wherein determining (310) that environmental air requires cleaning comprises:
- obtaining (312) air quality data (60) indicating a pollution level from exterior air; and
- comparing (314) the pollution level to a pre-determined pollution threshold and determining (316) that the pollution level is higher than the pre-determined pollution threshold.

11. The method (300) of claim 10, comprising one or more of:
determining (323), by the controlling circuit (120), that the vehicle speed (11) is out of the speed range of fan influence and not operating (322) the fan (30);
determining (323), by the controlling circuit (120), that the vehicle speed (11) is below a minimum vehicle speed;
determining (323), by the controlling circuit (120), that the vehicle is stationary.

12. The method (300) of claim 10 or claim 11, comprising:
- obtaining (330) a location of the vehicle (10);
- obtaining (332) urbanization data (72) indicating whether the location of the vehicle (10) is or is not in an area requiring air cleaning, wherein urbanization data (72) is obtained from a database (70) comprising a digital representation of a map;
- determining (334), by the controlling circuit (120), that the urbanization data (72) indicates that the location of the vehicle (10) is not in an area requiring air cleaning, and blocking (336) air flow through the filter (102);
or
- determining (337), by the controlling circuit (120), that the urbanization data (72) indicates that the location of the vehicle (10) is in an area requiring air cleaning and allowing (338) air flow through the filter (102).

13. The method (300) of any of the claims 10 to 12, further comprising:
- obtaining (340) weather data (8);
- determining (342), by the controlling circuit (120), if the weather data (80) indicates that an adverse weather event is occurring;
- and blocking (346) air flow through the filter (102) if it is determined that an adverse weather event is occurring,
wherein the adverse weather event is at least one of: snow, rain, sand storm, volcanic ash fall.

14. The method (300) of any of the claims 10 to 13, comprising limiting the fan operation due to pre-determined limits, such as one or both of:
(i) obtaining (350) battery charge level data (56) indicating a battery charge level, and obtaining a temperature data representing a regulating temperature of a part of the vehicle;
- determining (352) that the battery charge level is below a pre-defined reserve charge; and determining that the regulating temperature is within a pre-defined normal operation temperature range; and
- not operate (354) the fan (30);
(ii) obtaining (370) location data indicating a location of the vehicle (10);
- obtaining (372) the current time;
- acquiring (374) from a regulatory database (90) a sound intensity limit data (92) indicative of the sound intensity limit for the location of the vehicle (10) at the current time;
- limiting (376) a rotational speed of the fan (30) to a speed which corresponds to the sound intensity limit.

15. A computer program product comprising instructions which, when the program is executed by a microprocessor (124), causes the microprocessor (124) to perform the method (300) of any of the claims 10 to 14.
